# EUROPEAN PATENT APPLICATION

(11) **EP 1 702 944 A1**
(43) Date of publication of application: **20.09.2006**
(21) Application number: 05425159.0
(22) Date of filing: 17.03.2005
(51) Int. Cl.: C08J 9/00, C08L 25/04

(54) **Foamed polymer composition comprising polystyrene and polyethyleneterephthalate**

(71) Applicant: COOPBOX EUROPE S.P.A., 42100 Reggio Emilia (IT)
(72) Inventor: Marin Garcia, Juan, 30530 Cieza - Murcia (ES); Gonzalez Caceres, Antonio, 30800 Lorca - Murcia (ES); Fiordelisi, Fabio, 42100 Reggio Emilia (IT)
(74) Representative: Sabbiuni, Renzo

(57) **Abstract**

An expanded extruded polystyrene sheet is described, containing 0.5% to 3% polyethyleneterephthalate (PET) by weight of the polystyrene weight and /exhibiting an integral compact layer on at least one of its surfaces, as well as a method for the production of said sheet comprising the steps of forming a mixture comprising polystyrene and 0.5%-3% of (PET), melting the mixture by heating inside an extruder, adding a blowing agent to the melt mixture and extruding the mixture in an environment at lower pressure through a die, cooling the sheet on exit from the die on at least one of its surfaces by means of air blow.

## Description

### Field of application

The present invention refers to the foamed plastic material sector in general.

In particular it refers to a foamed thermoplastic material sheet having a uniform and consistent cell structure, and exhibiting a compact integral layer on at least one of its surfaces. The invention also concerns a method for the production of the aforesaid sheet as well as trays manufactured from said sheet.

### Prior art

Foamed thermoplastic material sheets having at least one compact surface layer have been known for some time and are used to obtain greater mechanical resistance and a better appearance (smooth uniform surface skin) but they are obtained by using complex and expensive processes such as lamination with a previously extruded compact material film or simultaneous extrusion by means of two different extruders, one for the foamed layer and the other for the compact layer, followed by in line calendering of the two layers obtained in this manner (extrusion coating). Another possibility consists in using two different extruders, one for the foamed part and the other for the compact part, whichmerge together to the same extrusion head (coextrusion). However, the addition of this compact layer, irrespective of how it is obtained according to the prior art, will increase the total weight of the sheet.

Simpler systems for obtaining extruded foamed sheets of thermoplastic material with a compact surface layer are based on intense cooling of the sheet surface before and/or during expansion in order to reduce the expansion of the aforesaid surface due to the increase in material viscosity. However, with these latter systems, the surface does not turn out to be perfectly compact, but only less expanded, and with only a small increase in the surface hardness and very little improvement in appearance.

Furthermore, obtaining a more compact surface layer by cooling the sheet surface before and/or during expansion results also in an increase in the overall density, and therefore in an increased weight, the thickness being equal, or in a decreased thickness, the weight being equal.

### Summary of the invention.

The problem underlying the present invention is to provide an extruded foamed sheet of thermoplastic material exhibiting at least one surface being compact, in order to increase the mechanical resistance of the sheet, and smooth in order to improve the appearance. This, without the need for the application of additional layers of material which, as well as making the method more complicated, also lead to an increased weight of the sheet, and without increasing the sheet weight by the intense surface cooling according to the known technique.

Such a problem has been solved by a sheet of expanded extruded polystyrene containing 0.5% to 3% polyethyleneterephthalate (PET)by weight ofthe polystyrene weight, and exhibiting an integral compact layer on at least one of its surfaces.

Preferably, said integral compact layer has a thickness of at least 30 µm and more advantageously between 50 and 150 µm.

By "compact layer" a layer where a cell structure is not discernable is meant.

The aforesaid sheet can present said integral compact layer on both of its surfaces.

The sheet according to the invention can have internally? a closed cell structure or a structure with mainly open and substantially ruptured cells in the central part and a mainly closed cell structure in the areas adjacent to the external compact layers. These different internal structures in the sheet can be obtained by means of suitable modifications in the experimental conditions during the performing of the production process of said sheet.

The latter process, which represents a further aspect of the present invention, comprises the steps of:
- forming a mixture comprising polystyrene and a quantity of polyethyleneterephthalate (PET) between 0.5% and 3% by weight of the polystyrene weight,
- melting the aforesaid mixture by means of heating inside an extruder,
- adding a blowing agent to the above melted mixture.
- extruding the mixture in an environment having a lower pressure, through a die, cooling the sheet as it exits from the die on at least one of its surfaces by means of air blow.

Preferably, the starting mixture is free of any nucleating agents, while it may contain other additives such as e.g. surfactants.

During the step in which the mixture is heated inside the extruder, the temperature is generally raised to over 270°C, and more advantageously to approximately 290°C, in order to obtain complete PET melting.

By regulating the temperature in the final zone of the extruder in an appropriate manner, it is possible to obtain with relatively low temperatures, sheets having a substantially closed cell structure or, with temperatures that are relatively higher, sheets can be obtained having a mainly open and ruptured cell structure in their central part.

A further aspect of the present invention relates to a tray for food packaging obtained by thermoforming the above described sheet. Trays for food products liable to release a liquid or serum, such as meat or fish for example, can be advantageously manufactured from the sheet according to the present invention in its embodiment comprising an internal layer of mainly open and ruptured cells, which act as receptacles to collect the released liquid. The tray will advantageously exhibit on the inside, at least at the base, a plurality of holes that cross the compact layer and that extend inside the open cell structure.

Said holes can be made after the thermoforming of the tray, or they can be made on the surface of the starting sheet intended to form the internal surface of the tray.

On the other hand, for other types of food products, sheets with a substantially closed cell structure can be used, having greater mechanical resistance.

In comparison with trays of the same shape, size and type, obtained by known processes, the trays according to the present invention show, in any case, a higher mechanical resistance, the overall weight being equal.. Alternatively, trays with a weight lighter than those obtained according to the known technique can be manufactured while maintaining the same mechanical resistance.

It has been surprisingly demonstrated that the addition of PET to the polystyrene in the initial mixture allows to obtain, following the process described above, a foamed extruded sheet with an integral compact layer on at least one of its surfaces, and that said compact layer appears smooth and polished, with an appearance that is perfectly comparable with that obtained using sheets having an additional layer applied by lamination, extrusion coating or coextrusion.

Such result is obtained without having to resort to additional extruders or calenders for lamination, and without any increase in the density of the sheet as it occurs in the case where intense cooling is applied to the sheet surface before and/or during its expansion.

The sheets according to the present invention, besides possessing a hard surface and a considerably improved appearance, thanks to the compact surface layer, also have greater resistance to flexion. This latter property is very important in the case where sheets are used to thermoform trays intended for food packaging on automatic wrapping machines.

It was also surprisingly found that with the addition of PET to polystyrene in the starting mixture, it is possible and even advantageous to avoid the addition of the nucleating agent. In fact, the PET performs a nucleating action, in other words, it acts as a regulator on the cell structure, thus making it possible to obtain many smallsized cells and therefore a resilient structure.

The nucleating agents known in the art are composed of powdered substances which can be finely divided inert materials such as talc, kaolin, calcium carbonate, or substances which release a gas in the form of microbubbles that act as nucleation centres on the substance used as a blowing agent (for example azocarbonamide or mixtures of alkali carbonates and organic acids).

In any case, this process involves powdered substances that are notoriously more difficult to manipulate and correctly measure than granulated products such as PET.

With the method according to the present invention, which uses granulated components only, not only is the metering more reliable and constant, but it also prevents the separation of the mixture components through sedimentation in the extruder hopper, which can occur very easily when some of the mixture components are in powder form such as the nucleating substances used in the known art.

Blowing agents that can be used in the process according to the invention could be, for example, lower aliphatic hydrocarbons, HFC, carbon dioxide and mixtures thereof.

As stated previously, a surfactant can be added to the starting mixture for the production of the sheet according to the invention, generally in quantities comprised between 0.2% and 10% of the weight of the polystyrene, and said surfactant can be anionic, cationic, or non-ionic. Particularly preferable are sulphonic acid salts or sulphuric ester salts with alkaline metals or alkaline-earth metals.

Other additives that can be added to the starting mixture can be organic or inorganic coloring substances.

The present invention will be further described with reference to certain embodiments provided hereafter by way of illustrative and non limiting example with reference to the appended drawings.

### Brief description of the figures

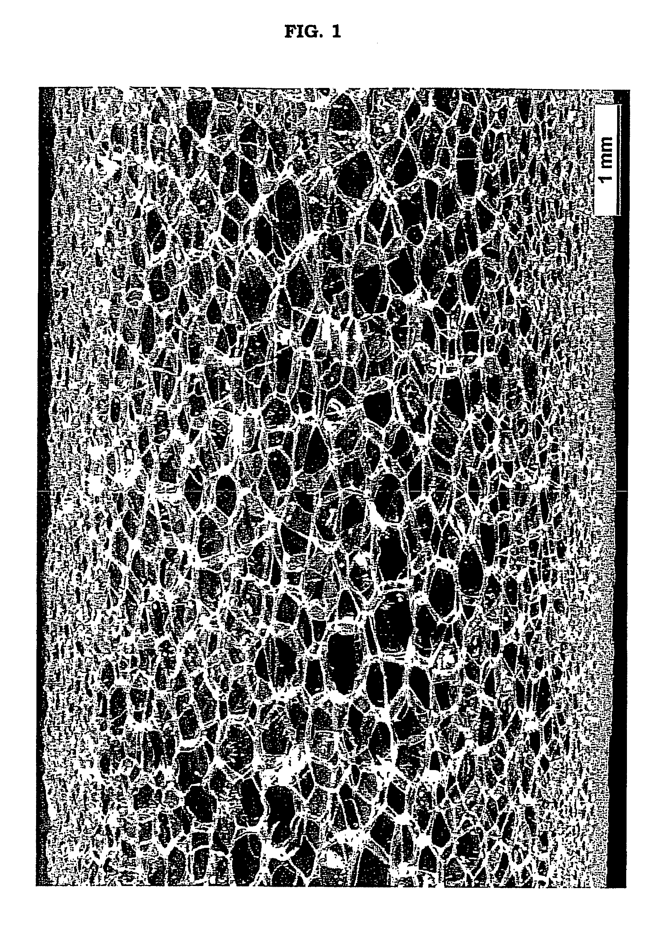

Figure 1 is an optical microscope photograph of a section of a sheet according to the invention;
Figure 2 is an optical microscope photograph of a section of a comparison sheet ;
Figure 3 is an optical microscope photograph of a section of a comparison sheet;

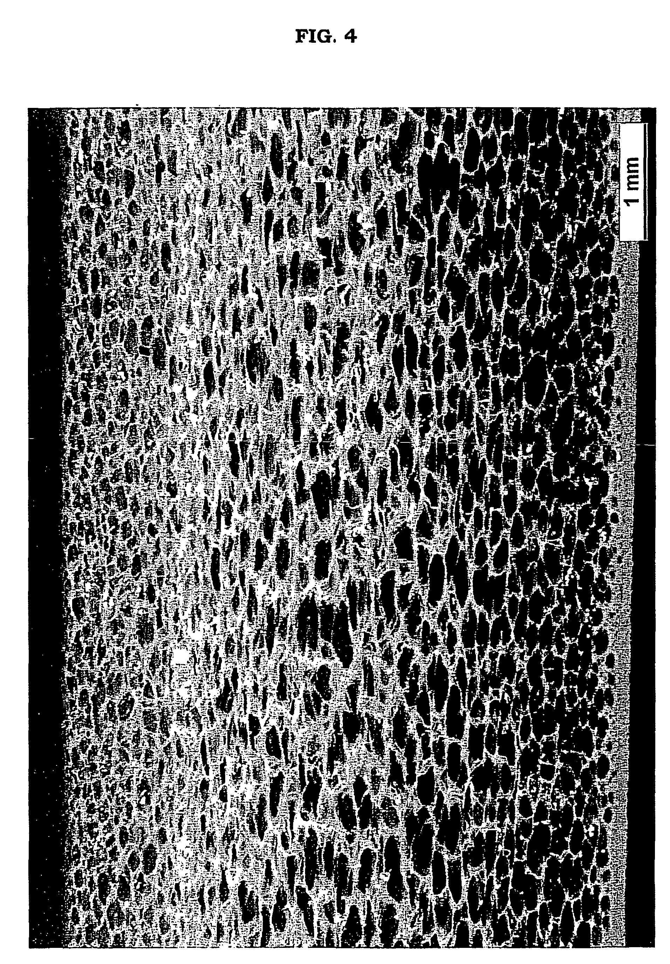

Figure 4 is an optical microscope photograph of a section of a sheet according to the invention.

### Detailed description of the invention

The process according to an embodiment of the present invention comprises an initial preparation step of a mixture composed of 97-99.5% of polystyrene and 0.5-3% of PET, to which additives, such as colorants or surfactants can be added according to necessity.

Then the mixture is introduced into an extruder that can be of various types, that is single-screw, single twin-screw, tandem single screw or tandem with primary twin screw.

The mixture is then plasticized and homogenized inside the extruder, by heating it to a temperature sufficient to melt the PET, in other words, by setting a temperature in the first zones of the extruder 50 - 80° higher than those commonly set in the known production technique for expanded polystyrene sheets.

Once the mixture has been plasticized, a blowing agent is introduced to cool it, setting the temperatures of the known technique for the expanded polystyrene extrusion.

The mixture thus cooled is extruded through a die, which preferably has the outlet opening in the shape of a circular crown, cooling at least one of the two surfaces by means of an air blow. The extruded product will be expanded with a very fine and consistent cellular structure and with at least one of the two surfaces composed of a compact layer.

The extruded product is then sized and cooled to give it the final dimension by means of an internally cooled cylindrical mandrel, around the exterior of which the tubular extruded product is made to slide, through the crown-shaped die.

Finally, the foamed sheet thus obtained is wound onto reels before it is sent off for thermoforming.

The aforesaid operational method was used to prepare several extruded foamed sheets, among which, those described in the examples provided below.

### EXAMPLE 1

A mixture was prepared as follows composed of: 100 kg of polystyrene with a Melt Flow Index of 1.2; 1.60 kg of PET with an intrinsic viscosity of 0.8.

The aforesaid mixture was fed into a tandem 60-90 mm extruder with screws having a length/diameter ratio equal to 30:1.

Butane, in a total amount of 3.3 kg, was added by means of a continuous metering pump to said mixture, after it had passed through the first part of the extruder, where it had been heated and homogenized.

The resulting mixture was extruded through a normal head for the production of expanded polystyrene, equipped with a die with a 110 mm diameter, open to 0.9 mm, and an air cooling ring, under the following operating conditions:

| Primary Extruder: | |
|---|---|
| Melting zone temperature | 290°C |
| Gas injection zone temperature | 200°C |
| Filter change temperature: | 200°C |

| Secondary Extruder: | |
|---|---|
| First cooling zone temperature: | 160°C |
| Second cooling zone temperature: | 155°C |
| Third cooling zone temperature: | 140°C |
| Fourth cooling zone temperature: | 135°C |
| Fifth cooling zone temperature: | 130°C |
| Extrusion head temperature: | 130°C |
| Male die temperature: | 120°C |
| External ring air pressure: | 0.5 bar |
| External ring air temperature: | 10°C |
| Primary screw rotation speed: | 100 rpm |
| Secondary screw rotation speed: | 12 rpm |
| Hourly production: | 100 kg/hour |

The expanded polystyrene tubular product extruded in this manner is sized on a mandrel with a diameter of 423 mm, to provide after having been longitudinally cut and laid out, a sheet 1330 mm wide and 4 mm thick with a weight of 285 g/m².

The sheet thus obtained exhibited a closed cell structure with very fine cells close to the surface of the sheet and in particular, one of the external layers was very much more compact than the central layer.

Photo 1 shows a section of said sheet taken with the aid of a microscope.

### EXAMPLE 2 (COMPARISON)

Under the same extrusion conditions (temperature, screw speed, hourly production, cooling ring air pressure) as those used for example 1, with the exception of the melting temperature which was that normally used for the production of expanded polystyrene, i.e. 210°C, a mixture was then introduced into the extruder composed of 100 kg of Polystyrene with a Melt Flow Index of 1.2; 0.800 kg of talc; 0.400 Kg of Hydrocerol Compound, which is a commercial blend of sodium bicarbonate and citric acid.

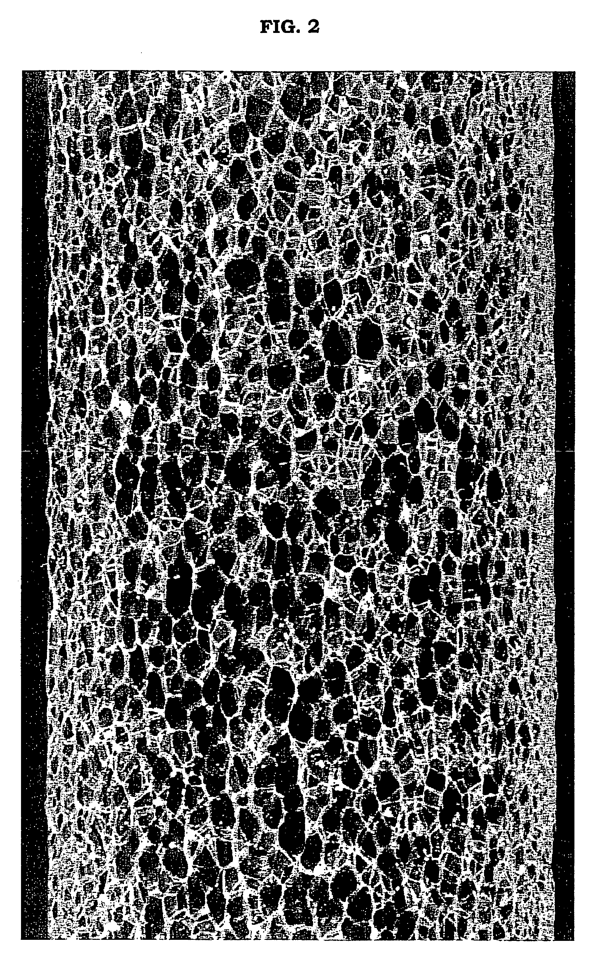

The sheet obtained was 4 mm thick with a weight of 285 gr/m² and had a uniform closed cell structure with a larger cell size than that obtained in example 1, as it can be seen in figure 2, showing a section photographed through microscope.

### EXAMPLE 3 (COMPARISON)

A mixture was prepared composed of 100 kg of Polystyrene with a Melt Flow Index of 1.2; 0.400 kg of talc; 0.200 Kg of Hydrocerol compound, which is a commercial blend of sodium bicarbonate and citric acid, 1.00 kg of a Master Batch composed of 50% of polystyrene and 50% sodium alkyl(C12-C14)sulphonate, used as a surfactant.

The aforesaid mixture was fed into a tandem 60-90 mm extruder with screws having a length/diameter ratio equal to 30:1.

Butane, in a total amount of 3.2 kg, was added by means of a continuous metering pump to said mixture, after it had passed through the first part of the extruder, where it had been heated and homogenized.

The resulting mixture was extruded through a normal head for the production of expanded polystyrene, equipped with a die with a 110 mm diameter, open to 0.9 mm, and an air cooling ring, under the following operating conditions:

| Primary Extruder: | |
|---|---|
| Melting zone temperature: | 210°C |
| Gas injection zone temperature: | 200°C |
| Filter change temperature: | 200°C |

| Secondary Extruder: | |
|---|---|
| First cooling zone temperature: | 190°C |
| Second cooling zone temperature: | 180°C |
| Third cooling zone temperature: | 178°C |
| Fourth cooling zone temperature: | 168°C |
| Fifth cooling zone temperature: | 168°C |
| Extrusion head temperature: | 125°C |
| Male drawplate temperature: | 95°C |
| External ring air pressure: | 0.5 bar |
| External ring air temperature: | 10°C |
| Primary screw rotation speed: | 105 rpm |
| Secondary screw rotation speed: | 12.5 rpm |
| Hourly production: | 100 kg/hour |

The expanded polystyrene tubular product extruded in this manner was sized on a mandrel with a diameter of 423 mm, to provide, once cut and laid out, a sheet 1330 mm wide and 3.8 mm thick with a weight of 253 gr/m².

The sheet obtained in this manner was then laminated with HIPS film (High Impact Polystyrene) using a flat head extruder according to known art, to form a sheet with a total weight of 283/gr/m².

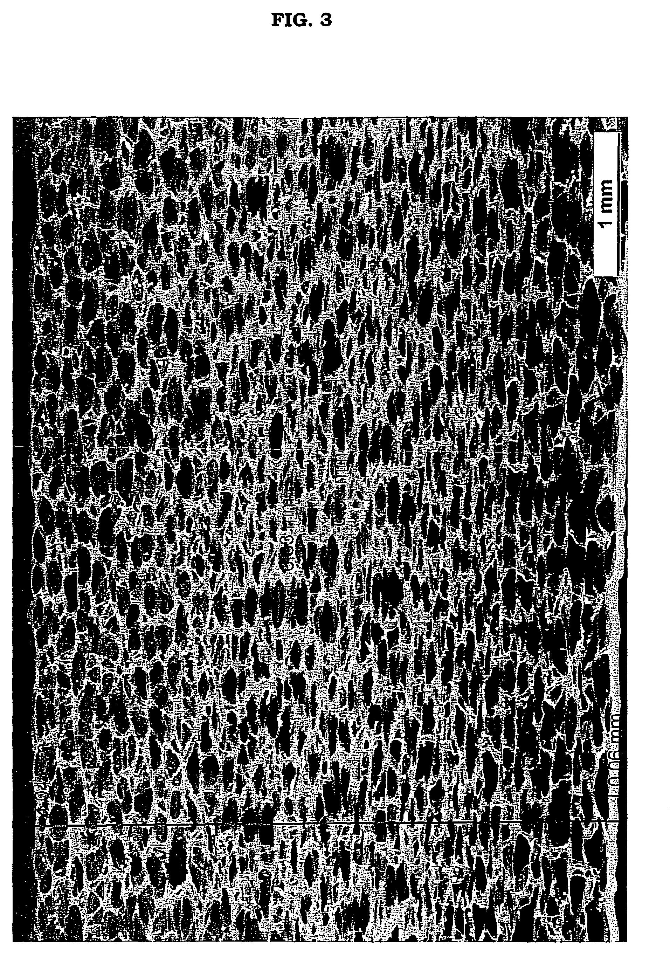

The sheet thus obtained had absorbing properties thanks to a ruptured cell structure, as shown in figure 3 in a section through microscope.

### EXAMPLE 4.

Under the same extrusion conditions (temperature, screw speed, hourly production, cooling ring air pressure) as those used for example 3, with the exception of the melting temperature which was raised to 290°C to melt the PET, a mixture was then introduced composed of 100 kg of Polystyrene with a Melt Flow Index of 1.2; 2.1 kg of PET, 1.00 kg of a Master Batch composed of 50% of polystyrene and sodium alkyl(C12-C14)sulphonate.

The sheet obtained was 4.2 mm thick with a weight of 280 g/m².

The sheet thus obtained exhibited an extremely compact structure in the more external layers and a ruptured cell structure in the central part.

Photo 4 shows a section of said sheet viewed under the microscope.

Comparing the resistance to flexion of the trays obtained by thermoforming the sheet produced according to example 3 with the first method (tray 1) with those obtained using the method according to this patent (tray 2) a considerable increase in mechanical resistance parameters of the tray was immediately recognisable (see table below). Furthermore from the appearance viewpoint, tray 2, although it was not laminated as in the case of tray 1 with a subsequent application of a film obtained through extrusion, the surface effect was just as pleasing as that of tray 1.

| | ***TRAY CHARACTERISTICS*** | | |
|---|---|---|---|
| | Weight [g] | Thickness (mm) | Breaking load [N] |
| Tray 1 | 12 | 4 | 41 |
| Tray 2 | 11.87 | 4.6 | 48.6 |

## Claims

**1.** Sheet of expanded extruded polystyrene containing 0.5% to 3% polyethyleneterephthalate (PET) by weight of the polystyrene weight and exhibiting an integral compact layer on at least one of its surfaces.

**2.** Sheet according to claim 1, wherein said integral compact layer has a thickness of at least 30µm.

**3.** Sheet according to claims 1 or 2, **characterized in that** it exhibits, in section, in its central zone a mainly open cell structure and, in the zone adjacent to the said integral compact layer, a mainly closed cell structure

**4.** Sheet according to claims 1 or 2, **characterized in that** it presents a substantially closed cell structure .

**5.** Method for the production of a sheet of expanded extruded polystyrene containing 0.5% to 3% polyethyleneterephtalate (PET) by weight of the polystyrene weight and exhibiting an integral compact layer on at least one of its surfaces, said method comprising the following steps:
forming a mixture comprising polystyrene and a quantity of polyethyleneterephthalate (PET) between 0.5% and 3% by weight of the polystyrene weight,
melting said mixture by means of heating inside an extruder,
adding a blowing agent to said melted mixture,
extruding said mixture in an environment having a lower pressure, through a die, cooling the sheet on exit from the die on at least one of its surfaces by means of air blow.

**6.** Method according to claim 5, **characterized in that** the mixture subjected to melting and extrusion is free of nucleating agents.

**7.** Method according to claim 5 or 6, wherein said mixture is melted by heating to a temperature over 270°C and preferably approximately 290°C.

**8.** Tray for the packaging of food products, **characterized in that** it is obtained by thermoforming a sheet according to claim 1 or 2.

**8.** Tray for the packaging of food products liable to release liquids, **characterized in that** it is obtained by thermoforming a sheet according to claim 3 and that it exhibits on its internal surface, at least at its base, a plurality of holes that extend inside the mainly open cell structure.

**9.** Use of a sheet according to any one of the claims from 1 to 4 for the production of trays for the packaging of food products.
